# EUROPÄISCHE PATENTANMELDUNG

(11) **EP 1 624 268 A1**
(43) Veröffentlichungstag der Anmeldung: **08.02.2006**
(21) Anmeldenummer: 05090223.8
(22) Anmeldetag: 27.07.2005
(51) Int. Cl.: F26B 21/10, F26B 21/12

(54) **Verfahren zum optimierten Erwärmen und Trocken von Schüttgut, insbesondere von Kunststoffpulver oder Kunststoffgranulaten**

(30) Priorität: 07.08.2004 DE 202004012482 U
(71) Anmelder: Wittmann Robot Systeme Gmbh, 90571 Schwaig (DE)
(72) Erfinder: Vierling, Andreas, 65468 Trebur (DE)
(74) Vertreter: Voigt, Günter

(57) **Zusammenfassung**

Es wird ein Verfahren zum optimierten Erwärmen und Trocknen von Schüttgut, insbesondere von Kunststoffpulver oder von Kunststoffgranulaten, beschrieben, wobei die Einhaltung der Luftmengen- und Temperaturbedingungen im Trocknungsbehälter (12) primär durch eine Luftmengensteuerung und erst bei Erreichen bzw. Unterschreiten eines vorgegebenen Grenzwertes der Luftmenge durch eine Temperatursteuerung erfolgt (Fig.1).

## Beschreibung

Die Erfindung bezieht sich auf ein Verfahren zum optimierten Erwärmen und Trocknen von Schüttgut, insbesondere von Kunststoffpulver oder Kunststoffgranulaten, gemäss Oberbegriff des Anspruchs 1.

In zahlreichen Fertigungsprozessen, insbesondere in der Kunststoffverarbeitung, müssen die Ausgangs- und/oder Zwischenprodukte vor einer Weiterverarbeitung getrocknet und ggfs. auch auf eine für die Weitervearbeitung optimale Temperatur vorgewärmt werden.

Dabei reichert sich die für den Trocknungsvorgang verwendete Prozessluft mit Feuchtigkeit an, die den Ausgangs- und/oder Zwischenprodukten entzogen wurde. Grundsätzlich könnte die so entstehende feuchtigkeitsbeladene warme Prozessluft zwar unbehandelt in die Umgebung abgegeben und durch Frischluft ersetzt werden. Im Hinblick auf die erzielbare Restfeuchte und den Energiehaushalt und damit auch aus Kostengründen scheidet eine solche Lösung jedoch aus.

Bei der Verarbeitung von Kunststoffgranulaten ist es - wie oben bereits erwähnt - erforderlich, das Kunststoffgranulat vor einer Verarbeitung oder Weiterverarbeitung zu trocknen. Dies geschieht mittels das Kunststoffgranulat in einem dafür vorgesehenen Trocknungsbehälter durchströmender trockener Warmluft (Prozessluft), die die Feuchtigkeit zunächst aufnimmt und dann anschließend wieder von der aufgenommenen Feuchtigkeit befreit werden muss.

Hierzu wird die mit Feuchtigkeit angereicherte Prozessluft zur Entfeuchtung einem Regenerationsprozess unterworfen. Die Entfeuchtung erfolgt in mit Molekularsieben versehenen Trocknungspatronen, in denen die mitgeführte Feuchtigkeit der Prozessluft adsorbiert wird.

Grundsätzlich werden dabei mehrere solcher Trocknungspatronen parallel geschaltet. Während zumindest eine Trocknungspatrone in der Trocknungsphase arbeitet, werden gleichzeitig eine oder mehrere parallel geschaltete Trocknungspatronen von der in ihnen adsorbierten Feuchtigkeit befreit und damit für eine neue Trocknungsphase aufbereitet.

Nach dem Stand der Technik ist es beispielsweise bekannt, die Regeneration der Trocknungspatronen im sogenannten Gleichstrom-Prinzip zu betreiben, d.h. die Strömungsrichtung in den Trocknungspatronen ist in der Trocknungsphase für die Prozessluft und in der Regenerationsphase der Trocknungspatrone stets gleichgerichtet.

Beim sogenannten Gegenstrom-Prinzip gemäss DE 101 18 762 A1 ist die Strömungsrichtung in den Trocknungspatronen während der Regeneration der Trocknungspatronen der Strömungsrichtung während des Trocknungsprozesses entgegengesetzt.

Der Vorteil des Gegenstrom-Prinzips liegt in einem deutlich geringerem Energieverbrauch während der Regeneration. Während die Trocknungspatrone im Verlauf des Trocknungsprozesses Feuchtigkeit aus der Prozessluft aufnimmt, wird sie in Strömungsrichtung kontinuierlich fortschreitend befeuchtet. Es entsteht eine in Strömungsrichtung wandernde Trennfront "feucht/trocken". Rechtzeitig bevor die so entstehende, durch die Trocknungspatrone wandernde Trennfront "feucht/trocken" das Ende der Trocknungspatrone erreicht, muss der Strom der zu trocknenden Prozessluft unter Wahrung einer Sicherheits- bzw. Pufferzone auf die andere Trocknungspatrone umgeschaltet werden. So ist sichergestellt, dass ohne zeitliche Unterbrechung eine trockene Zone zur Verfügung steht und somit ein kontinuierlicher, unterbrechungsloser Trockungsprozess ablaufen kann.

Bei der Gegenstrom-Regeneration wird der noch verbliebene trockene Bereich der Trocknungspatrone nunmehr als Ausgangspunkt benutzt, von dem aus auch die sich anschließenden durchfeuchteten Bereiche der Trocknungspatrone kontinuierlich durchlaufend in Gegenrichtung zur vorangegangenen Befeuchtung der Trocknungspatrone wieder getrocknet werden. Die Trennfront "feucht/trocken" wandert nunmehr entgegen ihrer ursprünglichen Bewegungsrichtung zurück.

Bei der Gleichstrom-Regeneration wird der zunächst verbliebene trockene Bereich der Trocknungspatrone dagegen zunächst befeuchtet und dann getrocknet.

Schließlich kommt teilweise auch das "By-Pass-Verfahren" zur Anwendung, bei dem die Regeneration der Trockungspatrone über die gesamte Zeit mit einer Teilmenge der Prozessluft erfolgt. Dabei werden etwa 15 bis 20 % der Prozeßluft aus dem Hauptstrom abgezweigt, auf etwa 220 bis 300 ° C aufgeheizt und der zu regenerierenden Trocknungspatrone zugeführt. Nach Abschluss des Trocknungsprozesses wird die der zu regenerierenden Trocknungspatrone zugeordnete Heizung abgeschaltet und mit dem abgezweigten Luftstrom der Prozessluft die regenerierte Trocknungspatrone bis auf ca. 60 ° C abgekühlt. Erst bei einer so weit erniedrigten Temperatur ist das Molekularsieb in der zu regenerierenden Trocknungspatrone wieder voll wirksam. Dabei muss allerdings eine ständig abströmende Teilmenge der Prozessluft als Frischluft in den Kreislauf aufgenommen werden, so dass die Prozessluft in einem gewissen Umfang zusätzlich mit Feuchtigkeit beladen wird und die im Trocknungsprozess stehende Trocknungspatrone schneller mit Feuchtigkeit gesättigt wird.

Wie der oben erwähnte Stand der Technik erkennen lässt, gibt es zahlreiche Bemühungen, die Funktionalität und den Wirkungsgrad der Regeneration sowie die Temperaturführung zu verbessern.

Aus der DE 101 18 762 A1 ist ein Verfahren bekannt, bei dem in Trocknungspatronen atmosphärische Luft auf ca. 220° C bis 300° C aufgeheizt und dann der Trocknungspatrone zugeführt wird. Die anschließende Rückkühlung der Trocknungspatrone auf die optimale Wirktemperatur von ca. 60° C erfolgt dann aus Gründen des Energiehaushalts mit einem aus der getrockneten Prozessluft abgezweigten Teilluftsstrom.

Aus der EP 0 061 161 ist es bekannt, zur Vermeidung von Energieverlusten die Menge des Luftdurchsatzes durch den Schüttgut-Trocknungsbehälter in Abhängigkeit von der Ablufttemperatur des Trocknungsbehälters zu steuern.

Falls sich der Schüttgutdurchsatz pro Zeiteinheit - beispielsweise wegen eines Staus in der Verarbeitung - verringert, verringert sich auch der Energiebedarf für die Trocknung und Erwärmung des Schüttguts im Trocknungsbehälter. Bei gleichbleibender Energiezufuhr käme es zu einem Anstieg der Temperatur am Ausgang des Trocknungsbehälters.

Dieser Effekt könnte dazu führen, dass die Abluft den Trocknungsbehälter mit einer relativ hohen Temperatur verlässt. Das in der Regenerationskammer als Adsorptionsmittel für die Feuchtigkeit üblicherweise verwendete Silicagel bzw. das Molekularsieb haben jedoch die Eigenschaft, dass deren Feuchtigkeitsaufnahmefähigkeit bei höherer Temperatur erheblich zurückgeht. Abluft mit einer Temperatur oberhalb 60° bis 80° C würde dann in der Regenerationskammer nicht mehr vollständig getrocknet. Die Zuluft enthält daher in einem solchen Fall bereits beim Eintritt in den Trocknungsbehälter Wasserdampf und damit einen verschlechterten Taupunkt. In Folge dessen verläuft der Trocknungsvorgang im Trocknungsbehälter verlangsamt und ggfs. unvollständig. Darüber hinaus steigt die Temperatur im Trocknungsbehälter in einem nicht erwünschten Mass an, was nachteilig für die hierin angebrachten Aggregate ist, höhere Energieverluste zur Folge hat und für das zu trocknende Schüttgut, dass in dem weiter oben geschilderten Fall zusätzlich länger im Trocknungsbehälter verweilt, zu thermisch bedingten Schäden führen kann, wobei die Materialschädigung zum einen abhängig ist von der Höhe der Temperatur und zum anderen von der Dauer der Temperatureinwirkung. Es besteht daher verständlicherweise der Wunsch, den Temperaturanstieg der Abluft so gering wie möglich zu halten bzw. die Trocknungstemperatur des Trockengutes zu reduzieren.

Der Erfindung liegt die Aufgabe zugrunde, ein Verfahren für die Trocknung und Vorwärmung von Schüttgut zu schaffen, das bei möglichst geringem apparativen Aufwand und relativ geringem Energieaufwand einen optimierten Verlauf der Trocknung und Erwärmung des Schüttguts im Trocknungsbehälter unter Berücksichtigung des Wirkungsgrades der Trocknungspatrone ermöglicht.

Die Lösung erfolgt mit Hilfe der Merkmale des Anspruchs 1.

Vorteilhafte Ausgestaltungen ergeben sich aus den nachfolgenden Unteransprüchen.

Die Erfindung wird nachfolgend unter Bezugnahme auf die Zeichnungsfigur näher erläutert. Es zeigt:

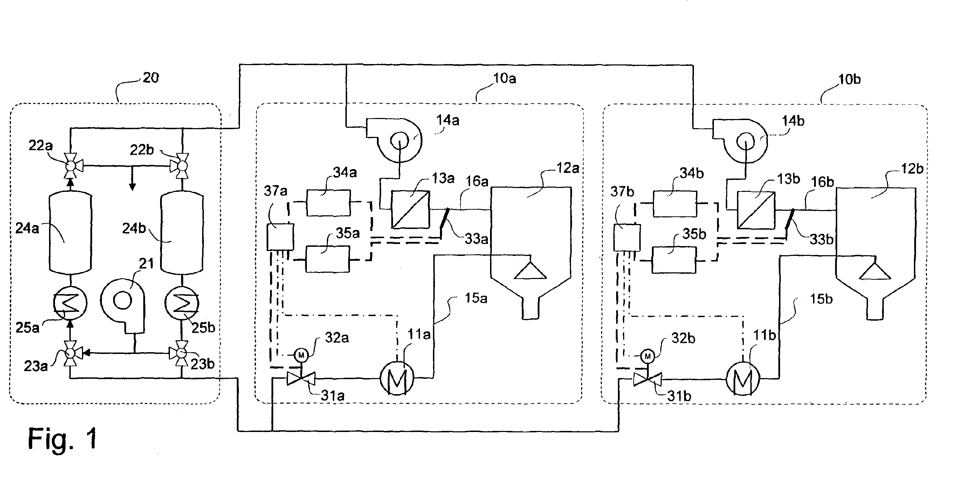

- Fig. 1: eine Prinzip-Darstellung einer Vorrichtung zur Durchführung des erfindungsgemäßen Verfahrens zur Trocknung von Kunststoffgranulat und zur Regeneration der beim Trocknungsprozess des Kunststoffgranulats befeuchteten Prozessluft mit Hilfe eines Molekularsiebs.

In Fig. 1 zeigt der umrandete rechte Bereich 10a bzw. 10b einen Trocknungsbehälter 12a bzw. 12b, dem in seinem unteren Bereich von einer Heizung 11a bzw. 11b kommende Prozessluft über eine Leitung 15a bzw. 15b zugeführt wird. Die Prozessluft durchströmt das zu trocknende Granulat im Trocknungsbehälter 12a bzw. 12b und tritt im oberen Bereich des Trocknungsbehälters 12a bzw. 12b aus diesem wieder aus. Über eine Leitung 16 am Ausgang des Trocknungsbehälters 12 und ein Filter 13 gelangt die Prozessluft dann zu einem Gebläse 14, von wo die Prozessluft in den Trocknungsbereich 20 weitergeleitet wird.

Für den Trocknungsbehälter 12 gibt es einen typischen Arbeitsbereich, der auf eine bestimmte Schüttgutmenge pro Zeit und den zu verarbeitenden Materialtyp abgestimmt ist. Sobald sich aus produktionstechnischen Gründen - beispielsweise wegen einer Unterbrechung der Fertigung - die im Trocknungsbehälter durchgesetzte Schüttgutmenge pro Zeiteinheit verringert und sich damit die Verweilzeit des Schüttguts im Trocknungsbehälter 12 erhöht, wird der typische Arbeitsbereich für den Trocknungsbehälter 12 verlassen und erhöht sich die Temperatur der Abluft.

Verweilt das Schüttgut jedoch über einen bestimmten zulässigen Zeitrahmen hinaus im Trocknungsbehälter 12, so erfährt es - ohne eine entsprechende Regelung der Umgebungsbedingungen - nicht nur eine über den gewünschten Umfang hinausgehende Trocknung und Vorwärmung, sondern auch eine unerwünschte thermische Schädigung. So können beispielsweise nachteilige Oxydationseffekte auftreten. Diese Materialschädigung ist abhängig sowohl von der Dauer der Temperatureinwirkung als auch von der Höhe der Temperatur. So wird bei einem stets mit einzukalkulierenden Produktionsstau zwangsläufig sowohl die Verweilzeit des Schüttguts im Trocknungsbehälter als auch - wegen des Ausbleibens der Zufuhr von noch unbehandeltem Schüttgut - die Temperatur erhöht.

Das Vorhandensein zweier Regelkreise (Temperaturregelung und Luftmengensteuerung) ist an sich erwünscht, bringt jedoch insofern Probleme, als die von einem Regelkreis angestrebte Veränderung stets durch den anderen Regelkreis zumindest teilweise wieder rückgängig gemacht wird. Bisher galt es daher als nicht zweckmäßig zwei Regelkreise nebeneinander bzw. gleichzeitig zu nutzen.

Wenn nämlich die Temperatursteuerung 35 für den Trocknungsbehälter die Temperatur absenkt, weil der vorgegebene Arbeitsbereich des Trocknungsbehälters 12 unterschritten wird, so veranlasst die Luftmengenregelung 34 im Gegenzug einen erhöhten Luftstrom und bringt damit unnötigerweise mehr Energie in den Trocknungsbehälter 12. In Folge dessen steigt dann die Temperatur des Trocknungsbehälters 12 wieder an. Eine Verbindung von Drosselung des Luftstroms und Absenkung der Temperatur führt zu wechselseitigen Beeinflussungen und wurde daher bisher nicht für zweckmäßig gehalten, kann aber unter den erfindungsgemäßen Bedingungen ohne weiteres eingesetzt werden.

Das erfindungsgemäße Verfahren soll in der Lage sein, ein schädliches Aufheizen des Schüttguts im Trocknungsbehälter 12 auch bei herabgesetzten Granulat- bzw.Schüttgutdurchsatz zu verhindern, einen guten Taupunkt zu erreichen, die in dem Gesamtsystem (Luftleitungen, Regenerations- und Trocknungsbehälter) anfallenden Energieverluste zu verringern und schließlich eine thermische Schädigung des Schüttgutes auszuschließen.

Das erfindunggemäße Verfahren wird zu diesem Zwecke so gestaltet, dass primär die Menge des Luftdurchsatzes durch den Trocknungsbehälter in Abhängigkeit von der Temperatur der Abluft des Trocknungsbehälters gesteuert wird (Luftmengensteuerung).

Diese Art der Luftmengensteuerung hat jedoch bei ca. 20 % der im Normalfall durch den Trocknungsbehälter 12 strömenden Luftmenge ihre Untergrenze. Bei einer weiteren Veringerung des Luftstroms kann es zu Inhomogenitäten im Schüttgut kommen. Aus diesem Grunde wird bei Erreichen der oben erwähnten Untergrenze des Luftstroms dieser nicht weiter abgesenkt, sondern nunmehr die Temperatur abgesenkt.

Wenn die Temperatursteuerung 35 für den Trocknungsbehälter 12 die Temperatur absenkt, weil der Arbeitsbereich des Trocknungsbehälters 12 unterschritten ist, so würde im Normalfall die Luftmengenregelung für mehr Luft sorgen und so unnötigerweise mehr Energie in den Trocknungsbehälter bringen mit der Folge, dass die Temperatur im Trocknungsbehälter und damit auch dessen Abluft-Temperatur wieder ansteigt.

Über Sensoren werden die Temperatur und die Strömungsgeschwindigkeit am Ausgang 16 des Trocknungsbehälters 12 gemessen.

Mit einer übergeordneten Steuerung 37 werden die Regelkreise Luftmengensteuerung 34 und Temperatursteuerung 35 koordiniert. Auf diese Weise ist es möglich, eine Luftmengensteuerung vorzunehmen, die für einen ersten Arbeitsbereich des Trocknungsbehälters 12 wirksam ist. Der Arbeitsbereich des Trocknungsbehälters 12 wird primär über die Luftmengensteuerung 34 festgelegt. Hierfür kann auch ein frequenzgeregeltes Gebläse zum Einsatz kommen. Erst darüber hinaus wird für einen zweiten Bereich - mit einer auf etwa 20 % des Normalfalls reduzierten Luftmenge - eine Temperatursteuerung wirksam.

Es können auch mehrere Trocknungsbehälter 12a, 12b mit einem aus mehreren Regenerationsbehältern 24a, 24b bestehenden Regenerationsbereich 20 zusammengeschaltet werden.

In diesem Regenerationsbereich 20 für die Prozessluft sind zumindest zwei Trocknungspatronen 24a und 24 b angeordnet, denen über Ventile 22a bzw. 22b die zu trocknende Prozessluft zugeführt werden kann. In einer ersten Phase wird einer Trocknungspatrone 24b wird über ein Ventil 22b die zu trocknende bzw.zu entfeuchtende Prozessluft zugeführt. Während des Durchströmens des in der Trocknungspatrone 24b angeordneten Molekularsiebs wird die in der Prozessluft enthaltene Feuchtigkeit in dem Molekularsieb adsorbiert. Im Molekularsieb bildet sich ein durchfeuchteter Eingangsbereich und ein sich anschließender trockener Bereich.

Die Trennfront "feucht/trocken" wandert dabei kontinuierlich vom Eintrittsbereich zum Austrittsbereich der Trocknungspatrone 24b. Während dessen wird in einem ersten Verfahrensschritt der Trocknungspatrone 24a mit einem Gebläse 21 über ein Ventil 23a und eine Heizung 25a heiße atmosphärische Luft zugeführt. Die mit der Heizung 25a auf etwa 220 bis 300 ° C erwärmte Frischluft wird der zu regenerierenden Trocknungspatrone 24a in Gegenrichtung zur Strömungsrichtung der Prozessluft so lange zugeführt, bis die Trennfront "trocken/feucht", die sich nun von unten nach oben bewegt, den oberen Bereich der Trocknungspatrone 24a erreicht. Wenn die Trennfront "trocken/feucht" den oberen Bereich der Trocknungspatrone 24a erreicht, wird der zweite Verfahrensschritt eingeleitet. Die Heizung 25a wird abgeschaltet und das Ventil 23a derart umgesteuert, dass nunmehr getrocknete Prozessluft von ca. 60° C für die Nachtrocknung und Kühlung der Trocknungspatrone 24a in diese zu regenerierende Trocknungspatrone eingeleitet wird, und zwar entgegen der Richtung, die für die zu trocknende Prozessluft festgelegt ist.

Bei den oben geschilderten Abläufen ist wichtig, dass rechtzeitig bevor die Trennfront "feucht/trocken" der im Trocknungsprozess für die Prozessluft stehenden Trocknungspatrone 24b deren Austrittsbereich erreicht, die Ventile 22a, 22b, 23a und 23b so gesteuert werden, dass die zu trocknende Prozessluft nicht mehr der Trocknungspatrone 24b, sondern der anderen Trocknungspatrone 24a zugeführt wird und nunmehr diese von oben nach unten durchströmt.

Die zuvor geschildereten Vorgänge laufen nunmehr mit zwischen Trocknungspatronen 24b und 24a vertauschten Rollen ab.

Anstelle der im Ausführungsbeispiel dargestellten zwei Trocknungspatronen 24a und 24b können darüber hinaus auch weitere Trocknungspatronen vorgesehen sein. Bei unterschiedlicher Nutzungsdauer der Trocknungspatronen 24a und 24b für den Trocknungsprozess der Prozessluft einerseits und für den Regenerationsprozess der Trocknungspatronen 24a bzw. 24b andererseits kann dem durch entsprechende Wahl der Zahl der im Trocknungs- bzw. Regenerationszyklus stehenden Trocknungspatronen Rechnung getragen werden.

Nach der mit Heissluft von ca. 220 bis 300 ° C erfolgten Trocknung der Trocknungspatrone 24a bzw. 24b muss diese auf eine Temeparatur von ca. 60 ° C abgekühlt werden, da erst bei einer solchen, erniedrigten Temperatur das Molekularsieb der Trocknungspatronen 24a, 24b wieder seine volle Wirksamkeit erreicht.

Für den Rückkühlvorgang kann ein Wärmetauscher vorgesehen werden. Mit einem solchen Wärmetauscher kann die nicht genutzte Wärmeenergie aus der Regeneration der Trocknungspatronen 24a, 24b in den Trockenluftstrom für das Trockengut überführt werden. Insbesondere bei einem Trockengut mit geringen Trocknungstemperaturen kann dies jedoch zu Problemen führen. Eine Verringerung der Wärmeaustauscher-Leistung oder gar ein Kühler können erforderlich werden.

Bei der teilweisen oder ausschliesslichen Verwendung atmosphärischer Luft hängt die Qualität der Regeneration - insbesondere während der Kühlphase - auch von der Luftfeuchte der atmosphörischen Luft ab.

Die Prozessluft wird auf ca. 220 bis 300 °, vorzugsweise jedoch auf 250 ° C, erwärmt, bevor diese zum Zweck der Regeneration der Trocknungspatrone 24a bzw. 24 b durch diese hindurchgeleitet wird. Dadurch werden die Bindungskräfte des Wassers zum Molekularsieb in der Trocknungspatrone 24a, 24b aufgehoben. Das Wasser kann von der Regenerationsluft aufgenommen werden. Dabei wird Energie verbraucht. Der Zeitpunkt, zu dem die gesamte Trocknungspatrone 24a, 24b kein Wasser mehr abgibt, kann durch den Temperaturverlauf auf der Abströmseite der Trocknungspatrone ermittelt werden. Zu diesem Zeitpunkt steigt die Temperatur deutlich schneller an.

Für die Kühlung der Trocknungspatrone 24a, 24 b wird ein aus der Prozessluft abgezweigter Teilluftstrom genutzt. Damit ergibt sich ein Ergebnis für die Regeneration, das nur noch vom Taupunkt der Prozessluft abhängt. Da ein konstanter Taupunkt für die Prozessluft angestrebt und weitgehend erreicht wird, ist auch das Ergebnis der Regeneration praktisch konstant.

Die eingesetzte Energie für die Regeneration ist durch die Wahl des weiter oben bereits erläuterten Gegenstrom-Prinzips optimiert.

Bei der Regeneration wird atmospärische Luft mit dem Regeneriergebläse 21 angesaugt, durch geeignete Ventilstellung 23a der Regenier-Heizung 25a zugeführt und dort erhitzt. Dabei erfolgt eine Erwärmung der Regenerierluft auf etwa 220 bis 300 ° C. Die so erhitzte Luft gelangt zur zu regenenierenden Trocknungspatrone 24a. Dort nimmt die erhitzte Luft Feuchtigkeit aus der Trocknungspatrone 24a auf. Hierbei wird die Tatsache genutzt, dass das Molekularsieb bei höheren Temperaturen weniger Wasser aufnehmen kann. Die mit Wasser beladehe Luft wird durch geeignete Ventilstellung 22a an die Umgebung abgegeben. Im nächsten Verfahrensschritt wird dan die Regenerations-Heizung 25a abgeschaltet und die Luftströmung derart gesteuert, dass bereits getrocknete Prozessluft mit einer Temperatur von ca. 50 bis 60 ° C für die Rückkühlung der Trocknungspatrone 24a verwendet wird.

In Verbindung mit der im Molekularsieb gespeicherten Wärme findet eine Nachtrocknung der Trocknungspatrone 24a statt. Die Nachtrocknung ist von äußeren Klimabedingungen unabhängig. Das Molekularsieb strebt ein neues, in Bezug auf den Wassergehalt tieferes Niveau an.

Die Luftströmung kann mit en Ventilen 22a, 22b, 23a, 23b derart gesteuert werden, dass die regenerierte Trocknungspatrone 24a wieder für die Trocknung der Prozessluft eingesetzt werden kann. Ganz entsprechend verläuft der Vorgang wechselweise mit der Trocknungspatrone 24b.

## Patentansprüche

1. Verfahren zum optimierten Erwärmen und Trocknen von Schüttgut, insbesondere von Kunststoffpulver oder von Kunststoffgranulaten, **dadurch gekennzeichnet, dass** die Einhaltung der Luftmengen- und Temperaturbedingungen im Trocknungsbehälter (12) primär durch eine Luftmengensteuerung und erst bei Erreichen bzw. Unterschreiten eines vorgegebenen Grenzwertes der Luftmenge durch eine Temperatursteuerung erfolgt.

2. Verfahren nach Anspruch 1, **dadurch gekennzeichnet, dass** der Grenzwert der Luftmenge bei ca. 20 % des Normalwertes der Luftmenge liegt.

3. Verfahren nach einem der Ansprüche 1 oder 2, **dadurch gekennzeichnet**, die Luftmengensteuerung über einen frequenzgesteuerten Gebläsemotor erfolgt.

4. Verfahren nach einem der Ansprüche 1 bis 3, **dadurch gekennzeichnet, dass** die Luftmengensteuerung und die Temperatursteuerung über eine übergeordnete Steuerung koordiniert werden.
